Europäisches Patentamt

(19) European Patent Office

Office européen des brevets

(11) Publication number: **0 107 256**
A1

(12) **EUROPEAN PATENT APPLICATION**

(21) Application number: **83201498.9**

(22) Date of filing: **18.10.83**

(51) Int. Cl.³: **G 02 B 25/00**

---

(30) Priority: **21.10.82 NL 8204068**

(71) Applicant: **van Ommeren, Jan, Zijdeweg 14, NL-2244 BG Wassenaar (NL)**

(43) Date of publication of application: **02.05.84 Bulletin 84/18**

(72) Inventor: **van Ommeren, Jan, Zijdeweg 14, NL-2244 BG Wassenaar (NL)**

(74) Representative: **van der Beek, George Frans et al, Nederlandsch Octrooibureau Johan de Wittlaan 15 P.O. Box 29720, NL-2502 LS Den Haag (NL)**

(84) Designated Contracting States: **AT BE CH DE FR GB IT LI LU NL SE**

---

(54) **Magnifying reading device.**

(57) Reading device comprising a rectangular plate of transparent material, destined to be positioned with his lower surface onto an information carrier, for instance the page of a book, and comprising a number of rectangular strokes (3) above the text lines (1) onto the information carrier, which strokes are shaped as cylinder segments.

EP 0 107 256 A1

ACTORUM AG

Magnifying reading device.

The invention relates to a magnifying reading device.

Many people have problems reading certain information carriers which are printed with a very small character type. An example thereof is for instance the telephone directory, which is not very good readable for many persons, especially older people. There are magnifying lenses available for more or less magnifying printed information. These devices has to be kept at a certain distance of the printed text and have to be moved along the lines of the text when reading.

Another known solution are the so called reading rulers, in general made of a stiff transparent plastic. These rulers are in cross sectional direction shaped in the form of a circle cylindrical segment. This rather broad ruler covers some lines of text and has to be moved to be able to read the next lines.

The object of the invention is now to provide a reading device suitable for magnifying the text onto a whole page or at least a large part thereof without moving the device.

In agreement with this object the invention now provides a reading device consisting of a rectangular plate of transparent material, destined to be positioned with his lower surface onto the information carrier, for instance the page of a book, and comprising parallel strips above the lines of the information carrier, which strips are shaped in the form of cylindrical segments.

Preferably the plate is made of a flexible plastic.

Preferably the center to center spacing between the cylindrical segments is equal to the line spacing onto the information carrier.

With this device a complete page or at least a large part thereof can be readed without moving the device.

This reading device can be fabricated very cheaply out off plastic, for instance using an extrusion method.

The invention will now be explained in more detail with reference to the drawing into which:

Figure 1 is a top view of a page of a book etcetera with on top thereof the reading device according to the invention;

Figure 2 is a perspective view of an embodiment of the reading device according to the invention; and

Figures 3 and 4 are cross sectional views according to line A-A in figure 1 of two other possible embodiments.

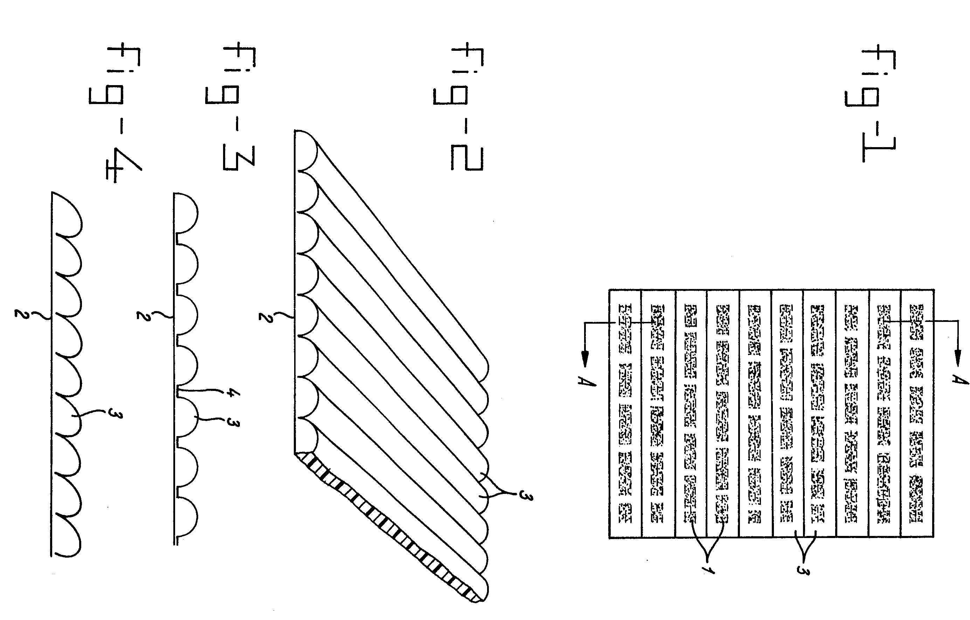

In figure 1 a page of a book etcetera is illustrated with the thereon printed lines of text, indicated by 1. To keep the drawing simple only a restricted number of lines is illustrated.

The reading device made of a clear transparent plastic material is placed on top of the page. The reading device has a rectangular shape and covers preferably the complete page.

The reading device comprises a flat lower surface 2 and a number of adjacent strips 3 at the upper side shaped as circle cylindrical segments. The center to center distance of this strokes 3 is preferably equal to the line spacing of the lines 1.

Each stroke 3 functions as a magnifying device of the reading ruler type.

Figure 3 indicates the possibility to connect the strokes 3 to each other by means of flat sections 4 to bridge a larger line spacing.

In figure 4 the strokes 3 are not shaped as circle cylindrical segments, but for instance as elliptical cylindrical segments with skewed axes. With this device it is possible to read under a certain viewing angle.

The reading device according to the invention can be fabricated for instance by an extrusion method, resulting into a very low cost price for each device.

A specially adapted reading device can be attached to each suitable book, for instance a telephone directory.

It is also possible to embody the reading device smaller than a page, for instance such that it covers half a page. After reading the upper half of the page the reading device has to be moved only once to the lower half.

The cost price can be reduced even further by applying advertising messages onto the edges of the device.

-----------

0107256

C L A I M S

1. Reading device comprising a rectangular plate of transparent material, destined to be positioned with his lower surface onto an information carrier, for instance the page of a book, and comprising a number of rectangular strokes above the text lines onto the information carrier, which strokes are shaped as cylinder segments.

2. Reading device according to claim 1, characterized in that the reading device is made of a flexible plastic.

3. Reading device according to claim 1 or 2, characterized in that the cylinder segments are circle cylindrical segments.

4. Reading device according to claim 1, 2 or 3, characterized in that the cylinder segments are directly adjacent to each other.

5. Reading device according to claim 1, 2 or 3, characterized in that the cylinder segments are connected to each other through elongated narrow flat strips.

6. Reading device according to one or more of the preceding claims, characterized in that the center to center distance between the cylinder segments is equal to the line spacing of the text onto the information carrier.

7. Reading device according to one or more of the preceding claims, characterized in that the plate dimensions and the center to center distance of the circle segments are adapted to the size of a page or a part thereof, to a number of text lines onto said page and to the line spacing of the text on to the information carrier.

8. Information carrier, such as a book, comprising a reading device as described in one or more of the preceding claims.

--------

Fig-1

A

3

1

A

Fig-2

3

2

Fig-3

4   3

2

Fig-4

3

2

8218

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 485 657 (ANSELIN) <br> * Whole document * | 1,3,4 | G 02 B 25/00 |
| Y |  | 2,6,7 |  |
| X | GB-A- 870 468 (VAN DEN BERGH) <br><br> * Page 3, line 129 - page 4, line 20; figure 7 * | 1-4,6, 7 |  |
| Y | NL-C- 58 047 (LANDYS & GYR) <br> * Whole document * | 6 |  |
| Y | US-A-2 527 071 (PIERCE) <br> * Whole document * | 2 |  |
| Y | FR-A-2 356 962 (CIAIS) <br> * Whole document * | 2,6,7 | TECHNICAL FIELDS SEARCHED (Int. Cl. ³) <br><br> G 02 B |

The present search report has been drawn up for all claims

| Place of search | Date of completion of the search | Examiner |
|---|---|---|
| THE HAGUE | 18-11-1983 | MEULEMANS J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82